# EUROPEAN PATENT SPECIFICATION

(11) **EP 0 724 606 B1**
(45) Date of publication and mention of the grant of the patent: **16.08.2001**
(21) Application number: 95900999.4
(22) Date of filing: 20.10.1994
(51) Int. Cl.: C08G 63/42, C08G 63/58, C08G 63/685

(54) **PREPARATION OF POLY(ETHER-ESTERS) FROM TETRAHYDROFURANS AND POLYCARBOXYLIC ACIDS**
HERSTELLUNG VON POLYETHER-ESTERN AUS TETRAHYDROFURANEN UND POLYCARBONSAÜREN
PREPARATION DE POLY(ETHER-ESTERS) A PARTIR DE TETRAHYDROFURANES ET D'ACIDES POLYCARBOXYLIQUES

(30) Priority: 21.10.1993 US 141160; 17.02.1994 US 198024
(43) Date of publication of application: 07.08.1996
(73) Proprietor: E.I. DU PONT DE NEMOURS AND COMPANY, Wilmington Delaware 19898 (US)
(72) Inventor: DRYSDALE, Neville, Everton, Newark, DE 19702-1026 (US); CITRON, Joel, David, Wilmington, DE 19810 (US)
(74) Representative: Jones, Alan John
(86) International application number: US9411728
(87) International publication number: WO9511267

(56) References cited:
- WO-A-94/19392
- DE-C- 886 304
- US-A- 2 811 512
- US-A- 3 464 958

## Description

### FIELD OF THE INVENTION

This invention concerns the preparation of poly(ether-esters) by polymerization of tetrahydrofurans and polycarboxylic acids catalyzed by metal perfluoroalkylsulfonate catalysts. The resulting products, particularly those made from dicarboxylic acids containing other functional groups, are useful as thermoplastic elastomers, urethane rubbers and spandex fibers.

### BACKGROUND OF THE INVENTION

Polymers, particularly block copolymers, of polytetrahydrofurans (usually as the diols) and polyesters or poly(urea-urethanes) are commonly used in commercial products, such as thermoplastic elastomers (Hytrel® thermoplastic elastomer), spandex fibers (Lycra® spandex fiber) and urethane rubbers (Adiprene® urethane rubber). The usual procedure in making these products is to combine a polyether diol with suitable reactants, such as ester segment forming compounds, or urea and/or urethane forming compounds such as amines and/or diols with diisocyanates. Improved methods of making such commercially important polymers are sought by the artisan.

U.S. Patent 3,842,019 describes the polymerization of oxiranes and other small ring compounds by a presumed cationic mechanism, using as the catalyst the decomposition products of metal perfluoroalkylsulfonates. These catalysts are described as "latent", that is no reaction occurs until the metal salt is decomposed. The reactions reported are relatively slow, even at elevated temperatures.

U.S. Patents 5,084,586 and 5,124,417 describe the cationic polymerization of various monomers, including cyclic ethers, using onium cations, whose corresponding anions are fluororalkylsulfatometallates. Onium ion catalyzed cationic polymerizations are well known, and there is no mention in these patents of the use of metal salts not containing onium ions, such as metal triflates, as catalysts for the polymerization of cyclic ethers.

Japanese Patent Application 51-82397 describes the polymerization of tetrahydrofuran using a combination of fluorosulfonic acid and a carboxylic acid as catalysts. No mention is made of metal salts, such as metal triflates as catalysts.

J. S. Hrkach, et al., Macromolecules, vol. 23, p. 4042-4046 (1990) describe the polymerization of tetrahydrofuran using trimethylsilyl trifluoromethanesulfonate as the initiator. No mention is made of any other triflates as catalysts for this polymerization.

G. A. Olah, et al., J. Appl. Polym. Sci., Vol. 45, 1355-1360 (1992) describe the use of boron, aluminum and gallium tristriflate to catalyze the polymerization of THF.

### SUMMARY OF THE INVENTION

This invention concerns a process for the production of poly(ether-esters), comprising, contacting a tetrahydrofuran with a polycarboxylic acid of the formula A(CO₂H)ₓ and a catalyst of the formula MZₛ•Qₜ, wherein:
- M is: a metal selected from cobalt, tungsten, vanadium, niobium, strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, zinc, cadmium, mercury, indium, thulium, germanium, tin, lead, arsenic, antimony and bismuth;
- Z is: an anion of the formula -OSO₂R⁵, wherein R⁵ is perfluoroalkyl containing 1 to 12 carbon atoms or part of a fluorinated group wherein the carbon atoms alpha and beta to the sulfonate group are together bonded to at least four fluorine atoms;
- s is: 1 when M is silver;
- s is: 2 when M is strontium, barium, cobalt, rhodium, iridium, palladium, platinum, chromium, zinc, cadmium or mercury;
- s is: 3 when M is scandium, yttrium, a rare earth metal, arsenic, antimony, bismuth, gold, iron, ruthenium, osmium, indium or thulium;
- s is: 4 when M is titanium, zirconium, hafnium, molybdenum, germanium, tin, or lead;
- s is: 5 when M is rhenium, vanadium, niobium or tantalum;
- s is: 6 when M is tungsten;
- Q is: a neutral liqand;
- t is: 0 or an integer of 1 to 6; and
- each A: is independently an organic radical having x free valencies;
- each x: is independently 2, 3, 4, 5 or 6; and
provided that:
A is bound to carboxyl groups through a carbon atom;
said polycarboxylic acid has a pKa of about 6 or less;
said polycarboxylic acid does not by itself catalyze polymerization of the tetrahydrofuran; and
the ratio of equivalents of carboxyl groups of said polycarboxylic acid to moles of said catalyst is less than 6.

This invention also concerns a polymer consisting essentially of a repeat unit of the formula

[(-CHR¹CR²R³CR²R³CHR⁴O-)ₙC(O)AC(O)O-]

wherein:
each R¹, R², R³ and R⁴ is hydrogen or hydrocarbyl containing 1 to 20 carbon atoms;
each n is independently an integer of 1 or more;
each A is independently substituted hydrocarbylene, containing one or more functional groups, selected from imide, amide, urea and urethane;
and provided that each A is bound to a ester group through a carbon atom.

### DETAILS OF THE INVENTION

In the present process a tetrahydrofuran is copolymerized with a polycarboxylic acid to yield a poly(ether-ester). By a tetrahydrofuran (THF) is meant the common meaning, a compound containing a saturated five membered ring in which one of the ring atoms is oxygen and the other four ring atoms are carbon. Preferred tetrahydrofurans have the formula I 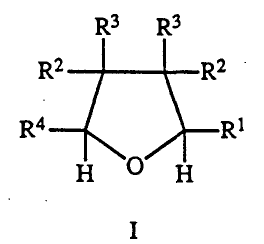 wherein each R¹, R², R³ and R⁴ is independently hydrogen or hydrocarbyl containing 1 to 20 carbon atoms. In especially preferred THFs, R¹, one of R² and all of R³ and R⁴ are hydrogen, and the remaining R² is alkyl containing 1-4 carbon atoms, particularly the remaining R² is methyl. In another especially preferred embodiment all of R¹, R², R³ and R⁴ are hydrogen.

A tetrahydrofuran is copolymerized with a polycarboxylic acid of the formula A(CO₂H)ₓ, wherein A is an organic radical, and wherein A is bound to each carboxyl group through a carbon atom. By "through a carbon atom" is meant that each carboxyl group is bound to a carbon atom which is part of A. A may contain any substituent which does not react during, or disturb, the polymerization. Suitable functional groups include halo, ester, amide, urethane, urea, keto, ether, imide, and sulfone, and hydrocarbon based "functional groups" such as olefins, aromatic rings, and acetylenic bonds. Especially preferred functional groups are ester, amide, imide, urethane and urea. The functional groups should be picked so that they don't undergo an acid base reaction with the carboxyl groups of the polycarboxylic acid. Thus aliphatic amine groups should not be present and are classified as among those groups which interfere with the polymerization.

Useful polycarboxylic acids include, but are not limited to, maleic acid, fumaric acid, succinic acid, adipic acid, isophthalic acid, terephthalic acid, and 1,2,4-benzenetricarboxylic acid. Preferred carboxylic acids are adipic, isophthalic and terephthalic acids.

The polycarboxylic acid has a pKa of less than 6, preferably less than 5, and should not by itself catalyze the polymerization of the tetrahydrofuran. In preferred carboxylic acids, x is 2 (a dicarboxylic acid). When x is more than two, a branched and/or crosslinked poly(ether-ester) will be produced.

The catalyst may be a yttrium or rare earth compound of the formula MZ₃ where M is a trivalent ion of yttrium, or one of the rare earths, lanthanum, cerium, praeseodymium, neodymium, promethium, samarium, europium, gadolinium, terbium, dysprosium, holmium, erbium, thulium, ytterbium, and lutetium.

Preferred metals, M, are strontium, scandium yttrium, the rare earth metals, titanium, zirconium, hafnium, vanadium, niobium, tantalum, chromium, molybdenum, tungsten, rhenium, iron, ruthenium, palladium, copper, gold, zinc, tin and bismuth. More preferred metals are yttrium, the rare earth metals, and scandium. Especially preferred metals are yttrium, ytterbium, dysprosium, erbium, neodymium, lanthanum, and scandium. Another preferred metal is "mischmetall" (sometimes also called "didymium"), which is a mixture of rare earth metals as obtained from the ore.

It is believed monovalent anions that are relatively nonnucleophilic are useful as Z. Examples of such anions are tetraphenylborate, -OSO₂R⁵, wherein R⁵ is perfluoroalkyl, or wherein R⁵ is part of a fluorinated polymer wherein the carbon atoms alpha and beta to a sulfonate group are together bonded to at least 4 fluorine atoms (as in -CF₂CF₂OSO₂-). It is preferred if R⁵ is perfluoroalkyl. In a particularly preferred R⁵ is trifluoromethyl, and that anion is herein called "triflate".

Generally speaking, any metallic compound in which the correct metal in the correct oxidation state (see above) is present and bonded to a triflate or a similar anion will be a catalyst. Such a compound must of course be reasonably stable during the polymerization or decompose to another compound which is still a triflate (or similar anion) compound of the metal in the correct oxidation state.

The metal catalysts may optionally contain one or more neutral ligands, Q, coordinated to the metal. By a neutral ligand is meant a neutral compound that can coordinate with the catalysts, usually the metal cation. Neutral ligands include water, and ethers such as dimethyl ether and tetrahydrofuran. Useful compounds containing neutral ligands include bis(n-cyclopentadienyl)tetrahydrofuran-bis(trifluoromethanesulfonate)-zirconium and bis(n-cyclopentadienyl)tetrahydrofuranbis(trifluoromethanesulfonate)hafnium.

In general, the higher the molar ratio of metal compound to cyclic ether monomer originally present, the lower the molecular weight of the resulting polyether will be.

The polymerization may be run at a temperature of about -80°C to about 130°C. If this temperature is above the boiling point of the cyclic ether monomer, a pressure vessel may be used. A preferred temperature is ambient to the boiling point of the monomer, or 110°C, whichever is lower. An inert solvent such as di-n-butyl ether, diethyl ether or toluene may be used, but it is preferred if solvents are not present. Protic compounds such as water, methanol and ethanol should preferably not be present, and it is convenient to exclude them by drying the starting materials and keeping the process under an inert dry gas such as nitrogen. As in most chemical processes, the ingredients should be mixed at least initially. Continued agitation is preferred to assure that the process materials remain well mixed, and to avoid overheating. The polymerization is mildly exothermic. If the polymerization temperature goes up appreciably, refluxing of the monomer may be used to help cool the process.

The molar ratio of THF to polycarboxylic acid at the beginning of the polymerization can be about 0.2 to about 60, preferably about 2 to about 15. Generally speaking, the higher the relative molar amount of polycarboxylic acid present, the greater the incorporation (per THF unit) of ester units (from polycarboxylic acid) will be. The desired amount of ester present will depend on the polycarboxylic acid used, and the use of the polymeric product.

However, the ratio of equivalents of carboxylic acid groups (in the polycarboxylic acid) to the number of moles of catalyst (MZₛ•Qₜ) should be less than six (i.e., carboxyl present/moles catalyst <6). In a simple batch reaction this means this ratio will be less than 6 at the start of the polymerization, and decrease as the polycarboxylic acid is polymerized, and its carboxyl groups are "used up" and converted to ester groups. However, as the carboxyl groups are used up by polymerization, they may be replaced by the addition of polycarboxylic acid, so long as the above ratio is less than 6.

When a dicarboxylic acid (x=2) is used in the polymerization, a (product) polymer repeat unit can be represented by the general formula

[(-CHR¹CR²R³CR²R³CHR⁴O-)ₙC(O)AC (O)O-]

wherein all of the symbols have the definitions as given above, and n is an integer of 1 or more. In preferred polymers, n is about 5 to about 500, more preferably about 8 to about 100. Useful A groups include tetramethylene, p-phenylene, and m-phenylene.

In another preferred polymer, n is 5 or more, more preferably 10 or more. It is preferred if A contains urea or urethane groups. By a urea group is meant -NH-C(O)-NR¹⁰-, and by a urethane group is meant -O-C(O)-NH-, wherein R¹⁰ is hydrogen or hydrocarbyl containing 1 to 20 carbon atoms. It is preferred if R¹⁰ is hydrogen. In other preferred polymers, all of R¹, R², R³ and R⁴ are hydrogen, or one of R² is methyl, the other R² is hydrogen, and all of R¹, R³, and R⁴ are hydrogen.

Another preferred polymer is one in which A has the formula

-R⁶-E-C(O)-NH-R⁷-NH-C(O)-E-[-R⁸-E-C(O)-NH-R⁷-NH-C(O)-E-]ₘ-R⁶-

wherein each R⁶, R⁷ and R⁸ is independently hydrocarbylene or substituted hydrocarbylene containing 2 to 25 carbon atoms, E is -O-or -NR¹⁰-, wherein R¹⁰ is as defined above, and m is an average of 0 to 10. Such polymers are made from dicarboxylic acids A(CO₂H)ₓ, wherein x is 2, and A has the formula shown above. Such diacids can be made by the reaction of one or more diisocyanates with one or more aminocarboxylic acids, hydroxy carboxylic acids, diamines, aminoalcohols and diols. The group R⁶ is derived from the amino- or hydroxycarboxylic acid, R⁷ is derived from an organic diisocyanate, and R⁸ is derived from a diamine or diol. When a particular E is -O-, it can be derived from the reaction of an isocyanate group and a hydroxy group to form a urethane. When a particular E is -NR¹⁰-, it can be derived from the reaction of an isocyanate and a primary amino group when R¹⁰ is hydrogen, and a secondary amino group when R¹⁰ is hydrocarbyl, to form a urea. All preferred formulae for dicarboxylic acids also refer to "A" in the polymer.

Dicarboxylic acids containing various functional groups can be made by methods known in this art. See, for instance, Chem. Abs., Vol. 44, 51 04 b-d (1950), S. Hsiao, et al., J. Polym. Sci., Part A, Vol. 28, pp. 2169-2178 (1990), and R. E. Asay et al., J. Heterocyclic Chem., Vol. 14, pp. 85-90 (1977).

To give a concrete example, if it is desired to make the dicarboxylic acid wherein both of R⁶ are 1,4-phenylene, R⁷ is 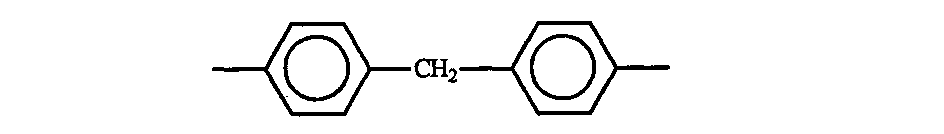 R⁸ is 1,4-phenylene, every E is -NH-, and m is an average of 1, one could react (preferably in solution) one mole of p-phenylene diamine, two moles of p-aminobenzoic acid, and two moles of bis(4-isocyanatophenyl)methane. To prepare the corresponding polymer where every E is -O-, one would use hydroquinone and p-hydroxybenzoic acid in place of p-phenylenediamine and p-aminobenzoic acid, respectively. To vary m, the ratio of diamine, diol and/or aminomonool to aminocarboxylic acid and/or hydroxyacid would be varied. The amount of diisocyanate would also be changed so it could react with all of the amino and/or hydroxy groups present. As the art skilled will understand, in reactions of this type, a distribution of m values will be obtained (except when m is 0) for individual molecules, and overall, m is the arithmetic average of the values for individual molecules. Fractional values of m are possible by varying the stoichiometry. Experiment 1 illustrates the preparation of such a dicarboxylic acid.

In preferred dicarboxylic acids:
R⁶ and R⁸ are each independently 1,4-phenylene, 1,3-phenylene, and n-alkylene containing 2 to 6 carbon atoms;
R⁷ is 1,4-phenylene, 1,3-phenylene, n-alkylene containing 2 to 6 carbon atoms, or

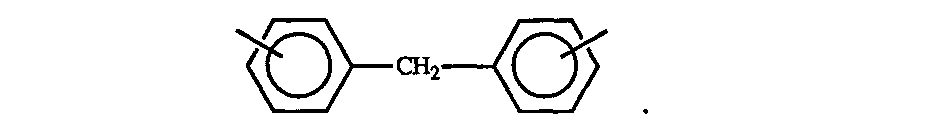

In especially preferred dicarboxylic acids:
R⁶ and R⁸ are each independently 1,4-phenylene, 1,3-phenylene, and n-alkylene containing 2 to 6 carbon atoms;
R⁷ is ethylene, or

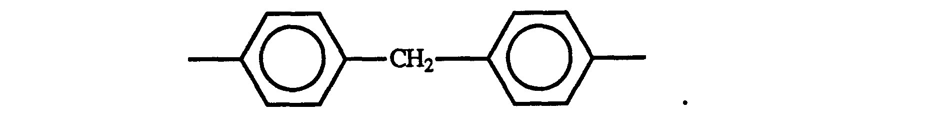

In other preferred dicarboxylic acids E is -NR¹⁰- wherein R¹⁰ is hydrogen, or m is an average of 0 to about 3.

By hydrocarbylene herein is meant a divalent radical containing only carbon and hydrogen. A substituted hydrocarbylene is a radical which also contains substituent groups that do not interfere with any of the reactions, including polymerization, described herein. Suitable functional groups have been listed above.

In the Examples, the following abbreviations are used:
DMAC - N,N-dimethylacetamide
MDI - bis(4-isocyanatophenyl)methane
RB - round-bottomed

The polymeric product of this invention, particularly one made from dicarboxylic acids containing other functional groups, is useful as a thermoplastic elastomer, urethane rubber or in spandex fiber. The ester groups of the poly(ester-ether) may be hydrolyzed to form polyether diols.

### EXAMPLE 1

### Polymerization of THF with Ytterbium Triflate and 3-Methyladipic Acid

In a dry box, ytterbium triflate (10.0 g) and 3-methyladipic acid (5.0 g) were added to each of three separate oven dried 100 mL RB flasks equipped with stirring bars. The flasks were sealed with rubber septa and then removed from the dry box. Nitrogen bleeds were attached and THF (20.0 mL) was added to each flask. After 2, 4, and 6 hours a polymerization was terminated via the addition of water (25 mL), ether (25 mL) and THF (50 mL). The resulting organic phases were separated, concentrated at reduced pressure and then dried under vacuum. Polymer yields and GPC analysis:

| Polymerization Time | Polymer Yield (g) | Mn (PS* STD) | Mw | PD |
|---|---|---|---|---|
| 2 hrs. | 2.96 | 8630 | 13800 | 1.61 |
| 4 hrs. | 3.15 | 8170 | 13300 | 1.63 |
| 6 hrs. | 4.79 | 7230 | 12600 | 1.75 |

| | | | | |
|---|---|---|---|---|
| *Polystyrene standard | | | | |

### EXAMPLE 2

### Polymerization of THF with Ytterbium Triflate and Adipic Acid

In a dry box, ytterbium triflate (5.0 g) and adipic acid (1.21 g) were added to an oven dried 100 mL RB flask equipped with a stirring bar. The flask was sealed with rubber septum and then removed from the dry box, a nitrogen bleed was attached and THF (20.0 mL) added. After 60 minutes the polymerization was terminated via the addition of water (25 mL), ether (25 mL) and THF (50 mL). The resulting organic phase was separated, concentrated at reduced pressure and then dried under vacuum. Polymer yield: 7.65 g. GPC analysis (PS STD.): Mn = 14000, Mw = 39300, PD = 2.80, IR analysis (CHCl₃, cm⁻¹) : 2860, 1727 (C=O), 1370, 1100.

### EXAMPLE 3

### Polymerization of THF with Ytterbium Triflate and Maleic Acid

In a dry box, ytterbium triflate (5.0 g) and maleic acid (1.9 g) were added to an oven dried 100 mL RB flask equipped with a stirring bar. The flask was sealed with rubber septum and then removed from the dry box, a nitrogen bleed was attached and THF (20.0 mL) added. After 60 minutes the polymerization was terminated via the addition of water (25 mL), ether (25 mL) and THF (50 mL). The resulting organic phase was separated, concentrated at reduced pressure and then dried under vacuum. Polymer yield: 3.98 g. GPC analysis (PS STD): Mn = 8950, Mw = 16800, PD = 1.88.

### EXAMPLE 4

### Polymerization of THF with Ytterbium Triflate and Isophthalic Acid

In a dry box, ytterbium triflate (5.0 g) and isophthalic acid (2.76 g) were added to an oven dried 100 mL RB flask equipped with a stirring bar. The flask was sealed with rubber septum and then removed from the dry box, a nitrogen bleed was attached and THF (20.0 mL) added. After 60 minutes the polymerization was terminated via the addition of water. The polymer was dissolved in methylene chloride. The resulting organic solution was washed with water (2 x 200 mL), then concentrated at reduced pressure and then dried under vacuum. Polymer yield: 12.24 g. GPC analysis (PS STD): Mn = 258000, Mw = 559000, PD = 2.16.

### EXAMPLE 5

### Polymerization of THF with Ytterbium Triflate and Terephthalic Acid

In a dry box, ytterbium triflate (5.0 g) and terephthalic acid (2.76 g) were added to an oven dried 100 mL RB flask equipped with a stirring bar. The flask was sealed with rubber septum and then removed from the dry box, a nitrogen bleed was attached and THF (20.0 mL) was added. After 60 minutes the polymerization was terminated via the addition of water. The polymer was dissolved in methylene chloride. The resulting organic solution was washed with water (2 x 200 mL), then concentrated at reduced pressure and then dried under vacuum. Polymer yield: 3.66 g. GPC analysis (PS STD): Mn = 308000, Mw = 744000, PD = 2.42.

### EXAMPLE 6

### Polymerization of THF with Ytterbium Triflate and A

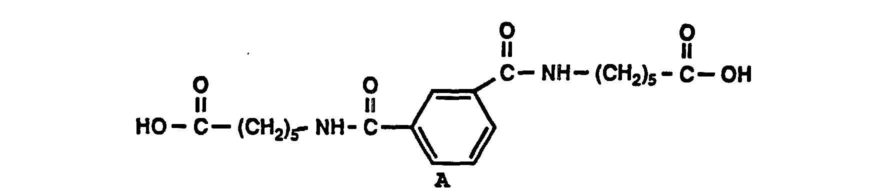

In a dry box, ytterbium triflate (5.0 g) and **A** (1.5 g) were added to an oven dried 100 mL RB flask equipped with a stirring bar. The flask was sealed with rubber septum and then removed from the dry box, a nitrogen bleed was attached and THF (20.0 mL) added. After 120 minutes the polymerization was terminated via the addition of water, THF and ether. The resulting separated organic solution was washed with sodium bicarbonate (2 x 25 mL), then concentrated at reduced pressure and dried under vacuum. Polymer yield: 2.37 g.

### EXAMPLE 7

### Polymerization of THF with Ytterbium Triflate and A

In a dry box, ytterbium triflate (5.0 g) and **A** (0.5 g) were added to an oven dried 100 mL RB flask equipped with a stirring bar. The flask was sealed with rubber septum and then removed from the dry box, a nitrogen bleed was attached and THF (20.0 mL) was added. After 60 minutes the polymerization was terminated via the addition of water, THF and ether. The resulting separated organic solution was washed with sodium bicarbonate (2 x 25 mL), then concentrated at reduced pressure and then dried under vacuum. Polymer yield: 1.97 g. GPC analysis (PS STD): Mn = 72200, Mw = 173000, PD = 2.39.

### EXAMPLE 8

### Polymerization of THF with Ytterbium Triflate and B

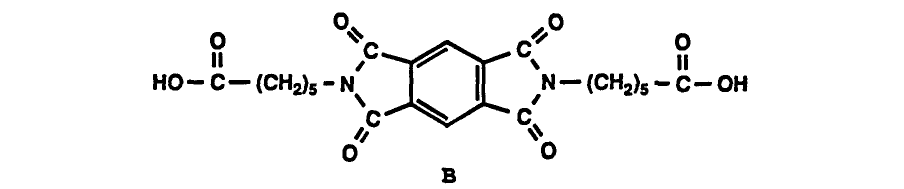

In a dry box, ytterbium triflate (5.0 g) and **B** (1.5 g) were added to an oven dried 100 mL RB flask equipped with a stirring bar. The flask was sealed with rubber septum and then removed from the dry box, a nitrogen bleed was attached and THF (20.0 mL) added. After 120 minutes the polymerization was terminated via the addition of water, THF and ether. The resulting separated organic solution was washed with sodium bicarbonate (2 x 25 mL), then concentrated at reduced pressure and then dried under vacuum. Polymer yield: 8.49 g. GPC analysis (PS STD): Mn = 127000, Mw = 341000, PD = 2.67.

### EXAMPLE 9

### Polymerization of THF with Ytterbium Triflate and 1,2,4-Benzenetricarboxylic Acid

In a dry box, ytterbium triflate (5.0 g) and 1,2,4-benzenetricarboxylic acid (2.0 g) were added to an oven dried 100 mL RB flask equipped with a stirring bar. The flask was sealed with rubber septum and then removed from the dry box, a nitrogen bleed was attached and THF (20.0 mL) added. After 21 hours the polymerization was terminated via the addition of water, THF and ether. The resulting separated organic solution was washed with sodium bicarbonate (25 mL) upon which a gelatinous material resulted. HCl was then added and the organic phase separated, then concentrated at reduced pressure and finally dried under vacuum. Polymer yield: 8.91 g. GPC analysis (PS STD): Mn = 100000, Mw = 227000, PD = 2.26.

### EXAMPLE 10

### Polymerization of THF with Ytterbium Triflate and 1,1'-Ethylenebis(5-oxo-3-pyrrolidecarboxylic Acid)

In a dry box, ytterbium triflate (5.0 g) and 1,1'-ethylenebis(5-oxo-3-pyrrolidecarboxylic acid) (1.0 g) were added to an oven dried 100 mL RB flask equipped with a stirring bar. The flask was sealed with rubber septum and then removed from the dry box, a nitrogen bleed was attached and THF (20.0 mL) added. After 3 hours the polymerization was terminated via the addition of water, THF and ether. The resulting separated organic solution was washed with sodium bicarbonate then the organic phase separated, concentrated at reduced pressure and finally dried under vacuum. Polymer yield: 5.21 g. GPC analysis (PS STD): Mn = 73200, Mw = 194000, PD = 2.65.

### EXAMPLE 11

### Polymerization of THF with Ytterbium Triflate and Isophthalic Acid and Terephthalic Acid

In a dry box, ytterbium triflate (5.0 g), terephthalic acid (2.00 g) and isophthalic acid (0.5 g) were added to an oven dried 100 mL RB flask equipped with a stirring bar. The flask was sealed with rubber septum and then removed from the dry box, a nitrogen bleed was attached and THF (20.0 mL) added. After stirring overnight the polymerization was terminated via the addition of water. The polymer was dissolved in methylene chloride. The resulting organic solution was washed with water (2 x 200 mL), then concentrated at reduced pressure and then dried under vacuum. Polymer yield: 7.38 g. GPC analysis (PS STD): Mn = 42000, Mw = 138000, PD = 3.30.

### EXAMPLE 12

### Polymerization of THF with Ytterbium Triflate and N-Acetyl-L-glutamic Acid

In a dry box, ytterbium triflate (15.0 g) and N-acetyl-L-glutamic acid (1.0 g) were added to an oven dried 100 mL RB flask equipped with a stirring bar. The flask was sealed with rubber septum and then removed from the dry box, a nitrogen bleed was attached and THF (20.0 mL) added. After stirring overnight the polymerization was terminated via the addition of water, THF and ether. The resulting organic solution was washed with water, then concentrated at reduced pressure and then dried under vacuum. Polymer yield: 2.82 g. GPC analysis (PS STD): Mn = 16600, Mw = 80500, PD = 4.83.

### EXPERIMENT 1

### Preparation of (HOCOPh-NHC(O)NH-Ph)₂-CH₂

In a dry box, MDI (25.0 g) was weighed into a 500 mL RB flask equipped with a stirrer, dimethylacetamide (DMAC, 75 mL) was then added. A solution of 4-aminobenzoic acid (27.8 g) in DMAC (25 mL) was slowly added to the stirred MDI/DMAC solution. The reaction was allowed to stir overnight, then the reaction mixture was poured into diethyl ether. The resulting precipitate was filtered and dried under vacuum at 100°C. In this compound all phenyl rings are para substituted.

### EXAMPLE 13

### Polymerization of THF with (HO₂CPh-NHC(O)NH-Ph)₂-CH₂ and Ytterbium Triflate

In a dry box, ytterbium triflate (5.00 g) and (HO₂OPh-NHC(O)NH-Ph)₂-CH₂ (1.0 g) were added to an oven dried 100 mL RB flask equipped with a stirring bar. The flask was sealed with a rubber septum and removed from the dry-box. After the attachment of a nitrogen bleed THF (20.00 mL) was added via syringe. After 18 hrs. the resulting solid mass was dissolved in THF (-800 mL) and water (~10 mL). The resulting mixture was filtered through Celite and then concentrated at reduced pressure to ~200 mL, then poured into a Waring blender containing water (~500 mL). The resulting precipitated polymer was recovered via filtration and dried under vacuum affording 10.30 g of white material.

### EXAMPLE 14

### Polymerization of THF/3-Me-THF with (HO₂CPh-NHC(O)NH-Ph)₂-CH₂ and Ytterbium Triflate

In a dry box, ytterbium triflate (5.00 g) and (HO₂CPh-NHC(O)NH-Ph)₂-CH₂ (1.0 g) were added to an oven dried 100 mL RB flask equipped with a stirring bar. The flask was sealed with a rubber septum and removed from the dry box. After the attachment of a nitrogen bleed THF (15.00 mL) and 3-Me-THF (5.0 mL) were added via syringe. After 18 hrs. the resulting solid mass was dissolved in THF (-800 mL) and water (~10 mL). The resulting mixture was filtered through Celite and then concentrated at reduced pressure to -200 mL, then poured into a Waring blender containing water (~500 mL). The resulting precipitated polymer was recovered via filtration and dried under vacuum affording 7.38 g of white material.

### EXPERIMENT 2

### Preparation of (HO₂CC(CH₃)₂CH₂O-C(O)NH-Ph)₂-CH₂

In a dry box, MDI (25.0 g) was weighed into a 500 mL RB flask equipped with a stirrer, dimethylacetamide (DMAC, 70 mL) was then added followed by hydroxypivalic acid (23.8 g). The reaction was allowed to stir overnight, then the reaction mixture was poured into water. The resulting precipitate was filtered and dried under vacuum at 100°C, affording 46.28 g (94.84%) of product. All phenyl rings in this compound are para substituted.

### EXAMPLE 15

### Polymerization of THF with (HO₂CC(CH₃)₂CH₂O-C(O)NH-Ph)₂-CH₂ and Ytterbium Triflate

In a dry box, ytterbium triflate (10.00 g) and (HO₂CC(CH₃)₂CH₂O-C(O)NH-Ph)₂-CH₂ (1.0 g) were added to an oven dried 100 mL RB flask equipped with a stirring bar. The flask was sealed with a rubber septum and removed from the dry box. After the attachment of a nitrogen bleed THF (20.00 mL) was added via syringe. After 16 hrs. the resulting solid mass was repeatedly washed with water, then dried under vacuum affording 6.40 g of white material. NMR and GPC analysis showed the product to be contaminated with a small amount of the starting diacid.

## Claims

1. A polymer consisting essentially of a repeat unit of the formula
[(-CHR¹CR²R³CR²R³CHR⁴O-)ₙC(O)AC(O)O-]
wherein:
each R¹, R², R³ and R⁴ is hydrogen or hydrocarbyl containing 1 to 20 carbon atoms;
each n is independently an integer of 1 or more;
each A is independently substituted hydrocarbylene, containing one or more functional groups, one of which must be selected from imide, amide, urea and urethane;
and provided that each A is bound to an ester group through a carbon atom.

2. The polymer as recited in Claim 1 wherein one or more of said imide, amide, urea or urethane are the only functional groups which are present.

3. A polymer according to claim 1 wherein
each A is
-R⁶-E-C(O)-NH-R⁷-NH-C(O)-E-[-R⁸-E-C(O)-NH-R⁷-NH-C(O)-E-]ₘ-R⁶-
wherein each R⁶, R⁷ and R⁸ is independently hydrocarbylene or substituted hydrocarbylene containing 2 to 25 carbon atoms, E is -O- or -NR¹⁰-, R¹⁰ is hydrogen or hydrocarbyl containing 1 to 20 carbon atoms, and m is an average of 0 to 10;
and provided that each A is bound to an ester group through a carbon atom.

4. The polymer as recited in Claim 1 wherein all of R¹, R², R³ and R⁴ are hydrogen; or one of R² is methyl, the other R² is hydrogen, and all of R¹, R³ and R⁴ are hydrogen.

5. The polymer as recited in Claim 3 wherein R¹⁰ is hydrogen and all of R¹, R², R³, and R⁴ are hydrogen; or one of R² is methyl, the other R² is hydrogen, and all of R¹, R³, and R⁴ are hydrogen.

6. The polymer as recited in Claim 3 wherein n is an average of about 8 to about 100.

7. The polymer as recited in Claim 3 wherein:
R⁶ and R⁸ are each independently 1,4-phenylene, 1,3-phenylene, or n-alkylene containing 2 to 6 carbon atoms; and
R⁷ is 1,4-phenylene, 1,3-phenylene, n-alkylene containing 2 to 6 carbon atoms, or

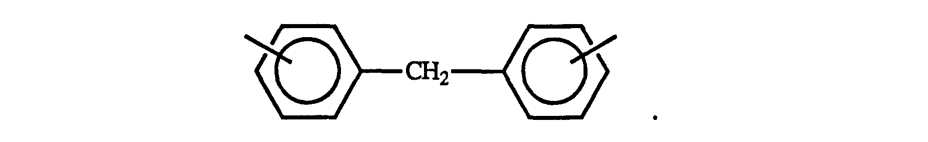

8. The polymer as recited in Claim 3 wherein:
R⁶ and R⁸ are each independently 1,4-phenylene, 1,3-phenylene, and n-alkylene containing 2 to 6 carbon atoms; and
R⁷ is ethylene or

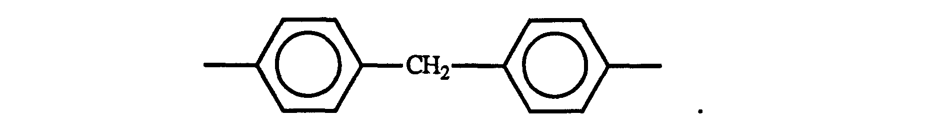

9. The polymer as recited in Claim 5 wherein:
R⁶ and R⁸ are each independently 1,4-phenylene, 1,3-phenylene, or n-alkylene containing 2 to 6 carbon atoms;
R⁷ is 1,4-phenylene, 1,3-phenylene, n-alkylene containing 2 to 6 carbon atoms, or

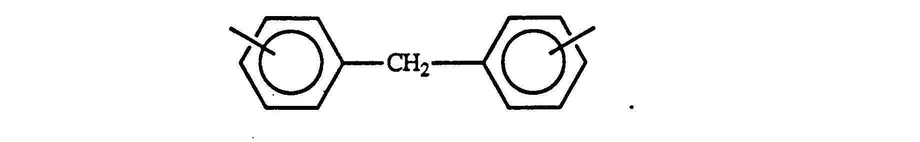

10. The polymer as recited in Claim 3 wherein E is -NR¹⁰-, and R¹⁰ is hydrogen.

11. The polymer as recited in Claim 3 wherein m is an average of 0 to about 3.

12. A process for the production of poly(ether-esters), comprising, contacting a tetrahydrofuran with a polycarboxylic acid of the formula A(CO₂H)ₓ and a catalyst of the formula MZₛ•Qₜ, wherein:
M is a metal selected from cobalt, tungsten, vanadium, niobium, strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, zinc, cadmium, mercury, indium, thulium, germanium, tin, lead, arsenic, antimony and bismuth;
Z is an anion of the formula -OSO₂R⁵, wherein R⁵ is perfluoroalkyl containing 1 to 12 carbon atoms or part of a fluorinated group wherein the carbon atoms alpha and beta to the sulfonate group are together bonded to at least four fluorine atoms;
s is 1 when M is silver;
s is 2 when M is strontium, barium, cobalt, rhodium, iridium, palladium, platinum, chromium, zinc, cadmium or mercury;
s is 3 when M is scandium, yttrium, a rare earth metal, arsenic, antimony, bismuth, gold, iron, ruthenium, osmium, aluminum, gallium, indium or thulium;
s is 4 when M is titanium, zirconium, hafnium, molybdenum, germanium, tin, or lead;
s is 5 when M is rhenium, vanadium, niobium or tantalum;
s is 6 when M is tungsten;
Q is a neutral ligand;
t is 0 or an integer of 1 to 6; and
each A is independently an organic radical having x free valencies;
each x is independently 2, 3, 4, 5 or 6; and provided that:
A is bound to carboxyl groups through a carbon atom;
said polycarboxylic acid has a pKa of about 6 or less;
said polycarboxylic acid does not by itself catalyze polymerization of the tetrahydrofuran; and
the ratio of equivalents of carboxyl groups of said polycarboxylic acid to moles of said catalyst is less than 6.

13. The process of Claim 12 wherein x is 2.

14. The process as recited in Claim 12 wherein M metal selected from the group consisting of strontium, barium, scandium, yttrium, the rare earth metals, titanium, zirconium, hafnium, chromium, molybdenum, tantalum, rhenium, iron, ruthenium, osmium, rhodium, iridium, palladium, platinum, silver, gold, zinc, cadmium, mercury, germanium, tin, lead, arsenic, antimony and bismuth.

15. The process as recited in Claim 12 wherein the tetrahydrofuran is of Formula I, wherein R¹, R⁴, and all of R² and R³ are hydrogen

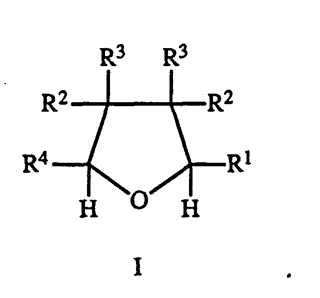

16. The process as recited in Claim 15 wherein the tetrahydrofuran is of Formula I, wherein R¹ and R⁴ are hydrogen, one of R² is hydrogen, the other R² is methyl, and both of R³ are hydrogen

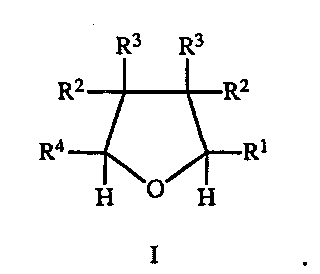

17. The process as recited in Claim 12 wherein R⁵ is trifluoromethyl.

18. The process as recited in Claim 12 wherein A is tetramethylene, p-phenylene, or m-phenylene.

19. The process as recited in Claim 12 wherein A contains one or more of imide, ester, amide, urethane or urea.

20. The process as recited in Claim 12 wherein the tetrahydrofuran is of Formula I wherein all of R¹, R², R³ and R⁴ are independently hydrogen or a C₁ to C₂₀ hydrocarbyl.

## Patentansprüche

1. Polymer, im wesentlichen bestehend aus einer Wiederholungseinheit der Formel
[(-CHR¹CR²R³CR²R³CHR⁴O-)ₙC(O)AC(O)O-]
wobei:
jedes R¹, R², R³ und R⁴ Wasserstoff oder Hydrocarbyl, enthaltend 1 bis 20 Kohlenstoffatome, ist;
jedes n ist unabhängig eine ganze Zahl von 1 oder mehr;
jedes A ist unabhängig substituiertes Hydrocarbylen, enthaltend ein oder mehrere funktionelle Gruppen, wobei eine davon aus Imid, Amid, Harnstoff und Urethan ausgewählt sein muß;
unter der Voraussetzung, daß jedes A an eine Estergruppe durch ein Kohlenstoffatom gebunden ist.

2. Polymer nach Anspruch 1, wobei ein oder mehrere aus dem Imid, Amid, Harnstoff oder Urethan die einzigen funktionellen Gruppen sind, die vorhanden sind.

3. Polymer nach Anspruch 1, wobei jedes A
-R⁶-E-C(O)-NH-R⁷-NH-C(O)-E-[-R⁸-E-C(O)-NH-R⁷-NH-C(O)-E-]ₘ-R⁶-
ist,
wobei jedes R⁶, R⁷ und R⁸ unabhängig Hydrocarbylen oder substituiertes Hydrocarbylen, enthaltend 2 bis 25 Kohlenstoffatome, ist, E ist -O- oder -NR¹⁰-, R¹⁰ ist Wasserstoff oder Hydrocarbyl, enthaltend 1 bis 20 Kohlenstoffatome, und m ist ein Durchschnitt von 0 bis 10;
und unter der Voraussetzung, daß jedes A an eine Estergruppe durch ein Kohlenstoffatom gebunden ist.

4. Polymer nach Anspruch 1, wobei alle von R¹, R², R³ und R⁴ Wasserstoff sind; oder eines von R² ist Methyl, das andere R² ist Wasserstoff, und alle von R¹, R³ und R⁴ sind Wasserstoff.

5. Polymer nach Anspruch 3, wobei R¹⁰ Wasserstoff ist, und alle von R¹, R², R³ und R⁴ sind Wasserstoff; oder eines von R² ist Methyl, das andere R² ist Wasserstoff, und alle von R¹, R³ und R⁴ sind Wasserstoff.

6. Polymer nach Anspruch 3, wobei n ein Durchschnitt von etwa 8 bis etwa 100 ist.

7. Polymer nach Anspruch 3, wobei:
R⁶ und R⁸ jeweils unabhängig 1,4-Phenylen, 1,3-Phenylen oder n-Alkylen, enthaltend 2 bis 6 Kohlenstoffatome, sind; und
R⁷ ist 1,4-Phenylen, 1,3-Phenylen, n-Alkylen, enthaltend 2 bis 6 Kohlenstoffatome, oder

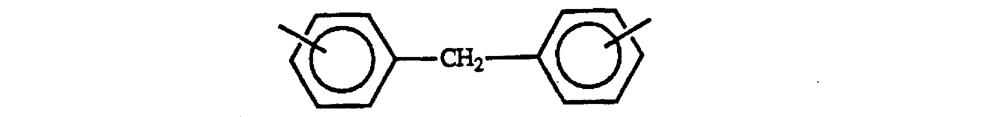

8. Polymer nach Anspruch 3, wobei:
R⁶ und R⁸ jeweils unabhängig 1,4-Phenylen, 1,3-Phenylen und n-Alkylen, enthaltend 2 bis 6 Kohlenstoffatome, sind; und
R⁷ ist Ethylen oder

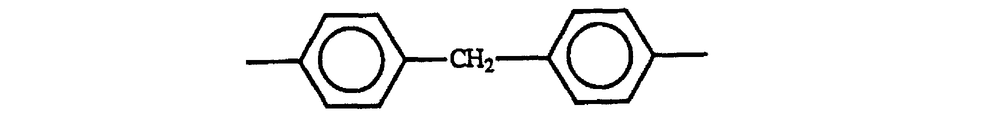

9. Polymer nach Anspruch 5, wobei R⁶ und R⁸ jeweils unabhängig 1,4-Phenylen, 1,3-Phenylen oder n-Alkylen, enthaltend 2 bis 6 Kohlenstoffatome, sind;
R⁷ ist 1,4-Phenylen, 1,3-Phenylen, n-Alkylen, enthaltend 2 bis 6 Kohlenstoffatome, oder

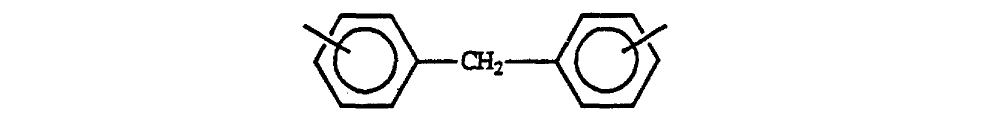

10. Polymer nach Anspruch 3, wobei E -NR¹⁰-ist, und R¹⁰ ist Wasserstoff.

11. Polymer nach Anspruch 3, wobei m ein Durchschnitt von 0 bis etwa 3 ist.

12. Verfahren für die Herstellung von poly(Ether-estern), umfassend in Kontakt bringen ein Tetrahydrofuran mit einer Polycarbonsäure der Formel A(CO₂H)ₓ und einem Katalysator der Formel MZₛ·Qₜ, wobei:
M ein Metall ist, ausgewählt aus Cobalt, Wolfram, Vanadium, Niob, Strontium, Barium, Scandium, Yttrium, den Seltenen Erdenmetallen, Titan, Zirconium, Hafnium, Chrom, Molybdän, Tantal, Rhenium, Eisen, Ruthenium, Osmium, Rhodium, Iridium, Palladium, Platin, Silber, Gold, Zink, Cadmium, Quecksilber, Indium, Thulium, Germanium, Zinn, Blei, Arsen, Antimon und Bismut;
Z ist ein Anion der Formel -OSO₂R⁵, wobei R⁵ Perfluoralkyl, enthaltend 1 bis 12 Kohlenstoffatome, oder Teil einer fluorierten Gruppe, wobei die Kohlenstoffatome alpha und beta zu der Sulfonatgruppe zusammen an mindestens vier Fluoratome gebunden sind, ist;
s ist 1, wenn M Silber ist;
s ist 2, wenn M Strontium, Barium, Cobalt, Rhodium, Iridium, Palladium, Platin, Chrom, Zink, Cadmium oder Quecksilber ist;
s ist 3, wenn M Scandium, Yttrium, ein Selten Erdenmetall, Arsen, Antimon, Bismut, Gold, Eisen, Ruthenium, Osmium, Aluminium, Gallium, Indium oder Thulium ist;
s ist 4, wenn M Titan, Zirconium, Hafnium, Molybdän, Germanium, Zinn oder Blei ist;
s ist 5, wenn M Rhenium, Vanadium, Niob oder Tantal ist;
s ist 6, wenn M Wolfram ist;
Q ist ein neutraler Ligand;
t ist 0 oder eine ganze Zahl von 1 bis 6; und
jedes A ist unabhängig ein organischer Rest mit x freien Valenzen;
jedes x ist unabhängig 2, 3, 4, 5 oder 6; und unter der Voraussetzung, daß
A an Carboxylgruppen durch ein Kohlenstoffatom gebunden ist;
die Polycarbonsäure hat einen pKa von etwa 6 oder weniger;
die Polycarbonsäure katalysiert nicht durch sich selbst Polymerisation des Tetrahydrofurans; und
das Verhältnis von Äquivalenten von Carboxylgruppen der Polycarbonsäure zu Molen des Katalysators ist weniger als 6.

13. Verfahren nach Anspruch 12, wobei x 2 ist.

14. Verfahren nach Anspruch 12, wobei M Metall ausgewählt ist aus der Gruppe, bestehend aus Strontium, Barium, Scandium, Yttrium, den Selten Erdenmetallen, Titan, Zirconium, Hafnium, Chrom, Molybdän, Tantal, Rhenium, Eisen, Ruthenium, Osmium, Rhodium, Iridium, Palladium, Platin, Silber, Gold, Zink, Cadmium, Quecksilber, Germanium, Zinn, Blei, Arsen, Antimon und Bismut.

15. Verfahren nach Anspruch 12, wobei das Tetrahydrofuran von Formel I ist, wobei R¹, R⁴ und alle von R² und R³ Wasserstoff sind.

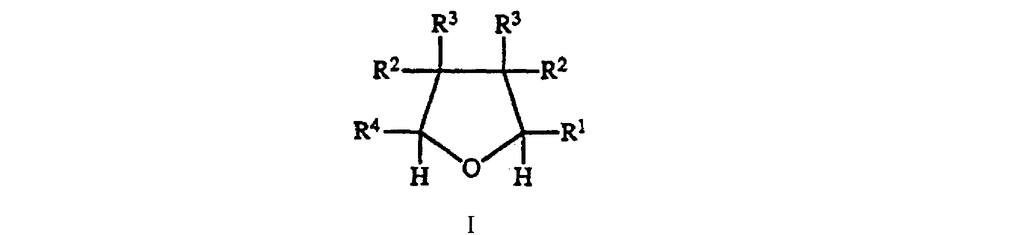

16. Verfahren nach Anspruch 15, wobei das Tetrahydrofuran von Formel I ist, wobei R¹ und R⁴ Wasserstoff sind, ein R² ist Wasserstoff, das andere R² ist Methyl, und beide R³ sind Wasserstoff.

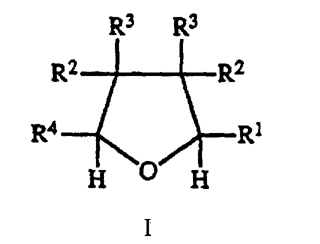

17. Verfahren nach Anspruch 12, wobei R⁵ Trifluormethyl ist.

18. Verfahren nach Anspruch 12, wobei A Tetramethylen, p-Phenylen oder m-Phenylen ist.

19. Verfahren nach Anspruch 12, wobei A ein oder mehrere von Imid, Ester, Amid, Urethan oder Harnstoff enthält.

20. Verfahren nach Anspruch 12, wobei das Tetrahydrofuran von Formel I ist, wobei alle R¹, R², R³ und R⁴ unabhängig Wasserstoff oder ein C₁ bis C₂₀ Hydrocarbyl sind.

## Revendications

1. Polymère consistant essentiellement en une unité répétée de formule
[(-CHR¹CR²R³CR²R³CHR⁴O-)ₙC(O)AC(O) O-]
dans laquelle
chaque R¹, R², R³ et R⁴ est hydrogène ou hydrocarbyle contenant 1 à 20 atomes de carbone ;
chaque n est indépendamment un entier de 1 ou plus ;
chaque A est un hydrocarbylène indépendamment substitué, contenant un ou plusieurs groupement(s) fonctionnel(s), dont un doit être choisi parmi imide, amide, urée et uréthanne ;
et à condition que chaque A soit lié à un groupement ester par un atome de carbone.

2. Polymère selon la revendication 1, dans lequel un ou plusieurs desdits imide, amide, urée ou uréthanne est ou sont le ou les seul(s) groupement(s) fonctionnel(s) présent(s).

3. Polymère selon la revendication 1, dans lequel chaque A est
-R⁶-E-C(O)-NH-R⁷-NH-C(O)-E-[-R⁸-E-C(O)-NH-R⁷-NH-C(O)-E-]ₘ-R⁶-
dans laquelle chaque R⁶, R⁷ et R⁸ est indépendamment un hydrocarbylène ou un hydrocarbylène substitué contenant 2 à 25 atomes de carbone, E est -O- ou -NR¹⁰-, R¹⁰ est hydrogène ou hydrocarbyle contenant 1 à 20 atomes de carbone, et m est une moyenne de 0 à 10 ;
et à condition que chaque A soit lié à un groupement ester par un atome de carbone.

4. Polymère selon la revendication 1, dans lequel tous les R¹, R², R³ et R⁴ sont hydrogène ; ou un des R² est méthyle, l'autre R² est hydrogène, et tous les R¹, R³ et R⁴ sont hydrogène.

5. ,- Polymère selon la revendication 3, dans lequel R¹⁰ est hydrogène et tous les R¹, R², R³ et R⁴ sont hydrogène ; ou un des R² est méthyle, l'autre R² est hydrogène, et tous les R¹, R³ et R⁴ sont hydrogène.

6. Polymère selon la revendication 3, dans lequel n est une moyenne d'environ 8 à environ 100.

7. Polymère selon la revendication 3, dans lequel :
R⁶ et R⁸ sont chacun indépendamment 1,4-phénylène, 1,3-phénylène ou n-alkylène contenant 2 à 6 atomes de carbone ; et
R⁷ est 1,4-phénylène, 1,3-phénylène ou n-alkylène contenant 2 à 6 atomes de carbone, ou

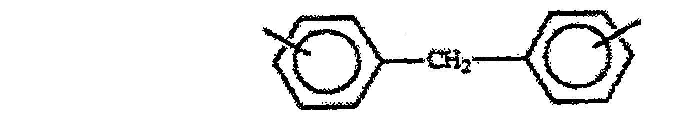

8. Polymère selon la revendication 3, dans lequel :
R⁶ et R⁸ sont chacun indépendamment 1,4-phénylène, 1/3-phénylène et n-alkylène contenant 2 à 6 atomes de carbone ; et
R⁷ est éthylène ou

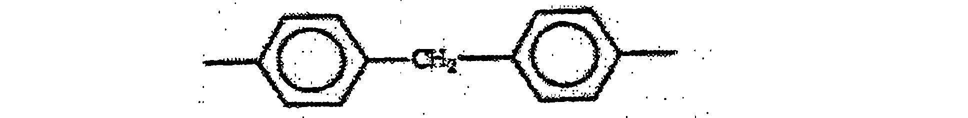

9. Polymère selon la revendication 5, dans lequel :
R⁶ et R⁸ sont chacun indépendamment 1,4-phénylène, 1,3-phénylène, ou n-alkylène contenant 2 à 6 atomes de carbone ;
R⁷ est 1,4-phénylène, 1,3-phénylène ou n-alkylène contenant 2 à 6 atomes de carbone, ou

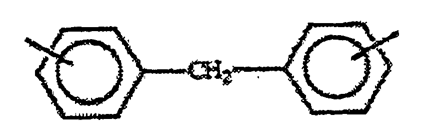

10. Polymère selon la revendication 3, dans lequel E est -NR¹⁰-, et R¹⁰ est hydrogène.

11. Polymère selon la revendication 3, dans lequel m est une moyenne de 0 à environ 3.

12. Procédé pour la production de poly(éther-esters), comprenant, la mise en contact d'un tétrahydrofuranne avec un acide polycarboxylique de formule A(CO₂H)ₓ et un catalyseur de formule MZₒ.Qₜ, dans lequel :
M est un métal choisi parmi le cobalt, le tungstène, le vanadium, le niobium, le strontium, le baryum, le scandium, l'yttrium, les métaux des terres rares, le titane, le zirconium, l'hafnium, le chrome, le molybdène, le tantale, le rhénium, le fer, le ruthénium, l'osmium, le rhodium, l'iridium, le palladium, le platine, l'argent, l'or, le zinc, le cadmium, le mercure, l'indium, le thulium, le germanium, l'étain, le plomb, l'arsenic, l'antimoine et le bismuth ;
Z est un anion de formule -OSO₂R⁵, dans laquelle R⁵ est un perfluoroalkyle contenant 1 à 12 atomes de carbone ou une partie d'un groupement fluoré dans lequel les atomes de carbone α et β par rapport au groupement sulfonate sont conjointement liés à au moins 4 atomes de fluor ;
s est 1 quand M est l'argent ;
s est 2 quand M est le strontium, le baryum, le cobalt, le rhodium, l'iridium, le palladium, le platine, le chrome, le zinc, le cadmium ou le mercure ;
s est 3 quand M est le scandium, l'yttrium, un métal de terre rare, l'arsenic, l'antimoine, le bismuth, l'or, le fer, le ruthénium, l'osmium, l'aluminium, le gallium, l'indium ou le thulium ;
s est 4 quand M est le titane, le zirconium, l'hafnium, le molybdène, le germanium, l'étain ou le plomb ;
s est 5 quand M est le rhénium, le vanadium, le niobium ou le tantale ;
s est 6 quand M est le tungstène ;
Q est un ligand neutre ;
t est 0 ou un entier de 1 à 6 ; et
chaque A est indépendamment un radical organique ayant x valences libres ;
chaque x est indépendamment 2, 3, 4, 5 ou 6 ; et à condition que :
A soit lié aux groupements carboxyles par un atome de carbone ;
ledit acide polycarboxylique a un pKa d'environ 6 ou moins ;
ledit acide polycarboxylique ne catalyse pas par lui-même la polymérisation du tétrahydrofuranne ; et
le rapport des équivalents des groupements carboxyliques dudit acide polycarboxylique aux moles dudit catalyseur est inférieur à 6.

13. Procédé selon la revendication 12, dans lequel x est 2.

14. Procédé selon la revendication 12, dans lequel le métal M est choisi parmi le groupe consistant en : le strontium, le baryum, le scandium, l'yttrium, les métaux des terres rares, le titane, le zirconium, l'hafnium, le chrome, le molybdène, le tantale, le rhénium, le fer, le ruthénium, l'osmium, le rhodium, l'iridium, le palladium, le platine, l'argent, l'or, le zinc, le cadmium, le mercure, le germanium, l'étain, le plomb, l'arsenic, l'antimoine et le bismuth

15. Procédé selon la revendication 12, dans lequel le tétrahydrofuranne est de formule I, dans laquelle R¹, R⁴ et tous les R² et R³ sont hydrogène.

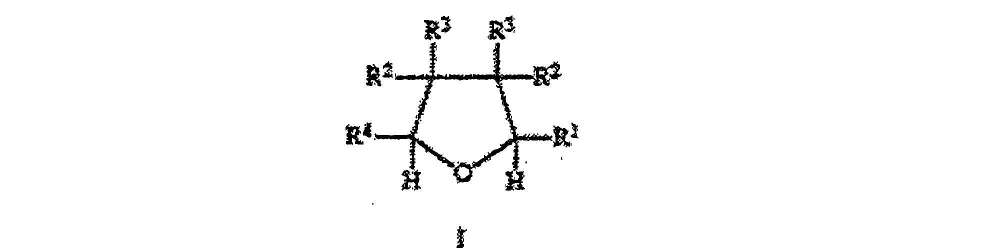

16. Procédé selon la revendication 15, dans lequel le tétrahydrofuranne est de formule I, dans laquelle R¹ et R⁴ sont hydrogène, un des R² est hydrogène, l'autre R² est méthyle et les deux R³ sont hydrogène.

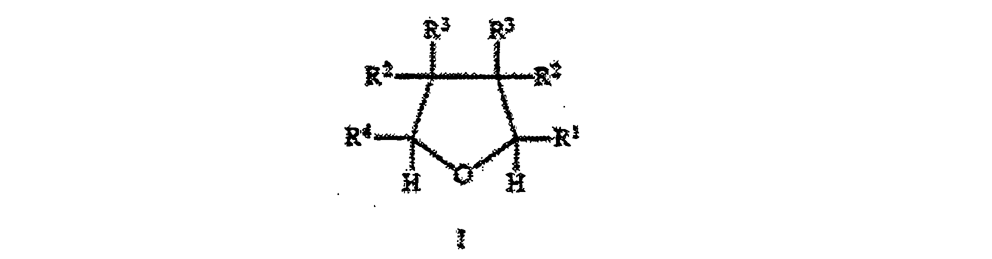

17. Procédé selon la revendication 12, dans lequel R⁵ est le trifluorométhyle.

18. Procédé selon la revendication 12, dans lequel A est le tétraméthylène, le p-phénylène ou le m-phénylène.

19. Procédé selon la revendication 12, dans lequel A contient un ou plusieurs parmi imide, ester, amide, uréthanne ou urée.

20. Procédé selon la revendication 12, dans lequel le tétrahydrofuranne est de formule I dans laquelle tous les R¹, R², R³ et R⁴ sont indépendamment hydrogène ou un hydrocarbyle en C₁ à C₂₀.
